# EUROPEAN PATENT APPLICATION

(11) **EP 4 790 820 A1**
(43) Date of publication of application: **12.08.2026**
(21) Application number: 24887398.6
(22) Date of filing: 17.06.2024
(51) Int. Cl.: H01M 50/474, H01M 50/477, H01M 50/30

(54) **WINDING NEEDLE, WINDING DEVICE, BATTERY MANUFACTURING APPARATUS, AND WINDING METHOD**

(30) Priority: 06.11.2023 CN 202322989204 U
(71) Applicant: Contemporary Amperex Technology Co., Limited, Ningde, Fujian 352100 (CN)
(72) Inventor: CHEN, Yongai, Ningde, Fujian 352100 (CN); XIANG, Hao, Ningde, Fujian 352100 (CN)
(74) Representative: Lorenz Seidler Gossel Part. mbB
(86) International application number: PCT/CN2024/099635
(87) International publication number: WO 2025/097774

(57) **Abstract**

Embodiments of this application provide a battery cell, a battery, and an electric device. The battery cell includes a housing, a pressure relief mechanism, an electrode assembly, and an insulating member. The housing has a first wall, the pressure relief mechanism is disposed on the housing, the electrode assembly is disposed inside the housing, and the insulating member is disposed between the electrode assembly and the first wall. The insulating member is configured to isolate the electrode assembly. The insulating member is provided with a vent passage, and the vent passage is configured to guide gas inside the battery cell to the pressure relief mechanism. The insulating member includes a body and a ceramic coating, the body being made of an insulating material, and the ceramic coating being disposed on a surface of the body. The technical solutions of this application improve the reliability of the battery.

## Description

### CROSS-REFERENCE TO RELATED APPLICATIONS

This application claims priority to Chinese Patent Application No. 202322989204.X, filed on November 06, 2023 and entitled "BATTERY CELL, BATTERY, AND ELECTRIC DEVICE", which is incorporated herein by reference in its entirety.

### TECHNICAL FIELD

This application relates to the field of battery production technologies, and specifically, to a battery cell, a battery, and an electric device.

### BACKGROUND

Energy conservation and emission reduction are crucial to the sustainable development of the automobile industry. Electric vehicles, with their advantages in energy conservation and environmental protection, have become an important part of the sustainable development of the automobile industry. For electric vehicles, battery technology is an important factor in connection with their development.

In the development of battery technologies, how reliability of batteries is enhanced is an urgent technical problem to be resolved in battery technologies.

### SUMMARY

This application is intended to provide a battery cell, a battery, and an electric device, so as to enhance the reliability of the battery.

This application is implemented using the following technical solutions.

In the technical solution of the embodiments of this application, a pressure relief mechanism is disposed on a housing of a battery cell, and an insulating member is disposed between an electrode assembly and a first wall, so that gas generated by the electrode assembly can be easily discharged from the pressure relief mechanism through a vent passage of the insulating member. In addition, a ceramic coating is disposed on a surface of a body of the insulating member, so that the insulating member has good insulation performance and good heat resistance, reducing the risk of venting being affected by the melting of the insulating member due to excessively high temperature inside the battery cell. Furthermore, the insulating member exhibits good electrolyte adsorption and wicking, which facilitates the infiltration into the electrode assembly, improving the reliability of the battery cell.

In some embodiments, two surfaces of the body in a thickness direction are each provided with the ceramic coating.

In the technical solution of the embodiments of this application, the two surfaces of the body in the thickness direction are each provided with the ceramic coating, so that both surfaces of the body in the thickness direction have good heat resistance, better reducing the risk of venting being affected by the melting of the insulating member. In addition, the insulating member exhibits better electrolyte adsorption and wicking, improving the reliability of the battery cell.

In some embodiments, thickness of the ceramic coating is 0.05 mm to 1 mm.

In the technical solution of the embodiments of this application, the thickness of the ceramic coating being set to 0.05 mm to 1 mm makes the insulating member have good heat resistance and good electrolyte adsorption and wicking, and also reduces the impact of the insulating member on the occupancy rate of the internal space of the housing, allowing the battery cell to have high space utilization.

In some embodiments, the insulating member is plate-shaped, where the vent passage includes a vent groove provided on at least one surface of the insulating member in a thickness direction, and the vent groove extends to an edge of the insulating member.

In the technical solution of the embodiments of this application, the vent groove is provided on at least one surface of the insulating member in the thickness direction, and the vent groove extends to the edge of the insulating member, so as to guide the gas generated by the electrode assembly, improving the venting capability of the battery cell.

In some embodiments, the ceramic coating is provided on a surface of the vent groove.

In the technical solution of the embodiments of this application, the ceramic coating is provided on the surface of the vent groove, so that the surfaces of the body in the thickness direction are each provided with the ceramic coating, and thus the insulating member has good heat resistance and good electrolyte adsorption and wicking, improving the reliability of the battery cell.

In some embodiments, the vent passage includes a vent hole running through the insulating member along a thickness direction of the body.

In the technical solution of the embodiments of this application, the insulating member is provided with the vent hole running through the insulating member along the thickness direction of the body, which communicates an end surface of the insulating member close to the electrode assembly and an end surface of the first wall. This facilitates the flowing of the gas generated by the electrode assembly through the vent hole, improving the venting capability of the battery cell, and also facilitates the infiltration of the electrolyte located on the first wall into the electrode assembly through the vent hole, improving the reliability of the battery cell.

In some embodiments, the insulating member further includes a plurality of spacers, where the plurality of spacers are spaced apart on a side of the body facing toward the first wall to form a vent gap between the body and the first wall, and the vent passage includes the vent gap.

In the technical solution of the embodiments of this application, the plurality of spacers are provided between the body and the first wall, so that there is the vent gap between the body and the first wall, allowing the gas generated by the electrode assembly to flow through the vent gap, improving the venting capability of the battery cell, thereby improving the reliability of the battery cell.

In some embodiments, the spacer is made of metal, mica, or porous ceramic.

In the technical solution of the embodiments of this application, the spacer being made of metal reduces the manufacturing cost of the spacer, saving the costs, and also provides good support for the body. The spacer being made of mica and porous ceramic provides good support for the body and has good electrolyte adsorption and wicking, improving the reliability of the battery cell.

In some embodiments, the vent passage includes a vent hole running through the body along a thickness direction of the body, where the vent hole is in communication with the vent gap.

In the technical solution of the embodiments of this application, the vent hole is made to communicate with the vent gap, so that part of the gas generated by the electrode assembly can flow into the vent gap through the vent hole and then be discharged from the pressure relief mechanism, improving the venting capability of the battery cell.

In some embodiments, the pressure relief mechanism is disposed on the first wall.

In the technical solution of the embodiments of this application, the pressure relief mechanism is disposed on the first wall, and the insulating member is disposed between the first wall and the electrode assembly, so that the gas inside the battery cell is guided to the pressure relief mechanism through the vent passage of the insulating member, which shortens the flow path of the gas inside the battery cell, and reduces the venting time, allowing the battery cell to have good venting capability.

In some embodiments, the battery cell includes an electrode terminal, where the housing has a second wall disposed adjacent to the first wall, and the electrode terminal is disposed on the second wall.

In the technical solution of the embodiments of this application, the electrode terminal is disposed on the second wall and the pressure relief mechanism is disposed on the first wall, that is, the electrode terminal and the pressure relief mechanism are disposed on different wall surfaces, which reduces the risk of the electrode terminal being affected by the venting of the pressure relief mechanism, improving the reliability of the battery cell, and also enables the electrode terminal and the pressure relief mechanism to be installed and maintained separately, improving the convenience of installation and maintenance of the battery cell.

In some embodiments, the battery cell includes an electrode terminal, where the housing has a third wall disposed opposite the first wall, and the electrode terminal is disposed on the third wall.

In the technical solution of the embodiments of this application, the electrode terminal is disposed on the third wall and the pressure relief mechanism is disposed on the first wall, that is, the electrode terminal and the pressure relief mechanism are disposed on opposite wall surfaces, which reduces the risk of the electrode terminal being affected by the venting of the pressure relief mechanism. In addition, the electrode terminal is the current outlet of the battery cell and needs to carry a large current. Therefore, the electrode terminal and the pressure relief mechanism being disposed on opposite wall surfaces also reduces the risk of an explosion-proof valve being affected by the electrode terminal, so that the battery cell has good structural strength, improving the reliability of the battery cell.

In some embodiments, the first wall is disposed downward when the battery cell is placed in an electric device or a battery.

In the technical solution of the embodiments of this application, when the battery cell is placed, the first wall faces downward, that is, the pressure relief mechanism faces downward. In this case, when the temperature or internal pressure of the battery cell reaches a threshold, the pressure relief mechanism discharges the gas, reducing the probability that impact waves or other substances generated by the pressure relief mechanism during venting pose risks, so that the battery cell has good reliability.

In some embodiments, the housing includes a shell and an end cover, where the shell includes a bottom wall and a side wall, the side wall surrounds the bottom wall, the side wall is connected to the bottom wall on one end and encloses an opening on the other end, the end cover covers the opening, and the first wall is the bottom wall.

In the technical solution of the embodiments of this application, the first wall is the bottom wall, that is, the pressure relief mechanism is disposed on the bottom wall, and the pressure relief mechanism faces downward when the battery cell is placed, reducing the probability that impact waves or other substances generated by the pressure relief mechanism during venting pose risks, so that the battery cell has good reliability.

In some embodiments, the body is made of polymer.

In the technical solution of the embodiments of this application, the body being made of polymer allows the body to have good corrosion resistance and high-temperature resistance and good insulation performance.

According to a second aspect, this application further provides a battery, where the battery includes the battery cell according to any one of the embodiments of the first aspect.

According to a third aspect, this application further provides an electric device including the battery cell according to any one of the embodiments of the first aspect or the battery according to any one of the embodiments of the second aspect, where the battery cell or the battery is configured to supply electric energy.

For additional aspects and advantages of this application, some will be given in the following description, and some will become apparent in the following description or will be understood in the practice of this application.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic diagram of an internal structure of a battery cell according to some embodiments of this application;
FIG. 5 is a schematic diagram of an internal structure of a battery cell according to some other embodiments of this application;
FIG. 6 is a schematic structural diagram of an insulating member according to some embodiments of this application; and
FIG. 7 is a schematic structural diagram of the insulating member in FIG. 6 from another perspective.

Reference signs: 1. battery cell; 10. housing; 11. first wall; 12. second wall; 13. shell; 131. bottom wall; 132. side wall; 133. opening; 14. end cover; 15. third wall; 20. pressure relief mechanism; 30. electrode assembly; 40. insulating member; 41. vent passage; 411. vent hole; 412. vent gap; 42. body; 43. ceramic coating; 44. vent groove; 45. spacer; 50. electrode terminal; 100. battery; 110. box; 120. first sub-box; 130. second sub-box; 1000. vehicle; 1100. controller; 1200. motor; and X. thickness direction.

### DESCRIPTION OF EMBODIMENTS

To make the objectives, technical solutions, and advantages in the embodiments of this application clearer, the following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "have", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

In this application, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. It is explicitly or implicitly understood by persons skilled in the art that the embodiments described in this application may be combined with other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In this application, "a plurality of" means more than two (inclusive). Similarly, "plurality" means more than two (inclusive), and "a plurality of pieces" means more than two (inclusive) pieces.

In some embodiments, the battery may be a battery module. When there are a plurality of battery cells, the plurality of battery cells are arranged and fixed to form one battery module.

In some embodiments, the battery may be a battery pack. The battery pack includes a box and battery cells, with the battery cells or battery modules accommodated within the box.

In some embodiments, the box may be a part of a chassis structure of a vehicle. For example, a part of the box may be at least a part of the chassis structure of the vehicle, or may be at least a part of the cross members and roof rails of the vehicle.

In the embodiments of this application, the battery cell may be a secondary battery. The secondary battery is a battery cell that can be charged after being discharged, to activate active materials for continuous use.

The battery cell may be but is not limited to a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like.

For example, the battery cell may be a cylindrical battery cell, a prismatic battery cell, a pouch battery cell, or a battery cell of another shape. The prismatic battery cell includes a rectangular battery cell, a blade battery cell, and a multi-prismatic battery. The multi-prismatic battery is, for example, a hexagonal prism battery. In the embodiments of this application, the blade battery cell is used as an example.

The battery cell may be further provided with a pressure relief mechanism. The pressure relief mechanism can be put into action or be activated to a given state to discharge gas inside the battery cell, such that the internal pressure and temperature of the battery cell are released. The action that the pressure relief mechanism is put into may include but is not limited to cracking, breaking, tearing, or opening at least part of the pressure relief mechanism. When the pressure relief mechanism discharges the gas, high-temperature and high-pressure substances inside the battery cell are discharged as emissions from an actuated site. In this way, the battery cell can relieve pressure and temperature under controllable pressure or temperature, thereby avoiding more serious potential incidents.

The emissions from the battery cell mentioned in this application include but are not limited to electrolyte, fragments of positive and negative electrode plates and separator because of dissolution or breaking, and high-temperature and high-pressure gases and flames produced by reactions.

The pressure relief mechanism in the battery cell greatly affects the safety of the battery. For example, when a short circuit, overcharging, or the like occurs, thermal runaway may be caused inside the battery cell, resulting in a sudden rise in pressure or temperature. In this case, the pressure relief mechanism can release the internal pressure and temperature to the outside, thus preventing the battery cell from exploding and catching fire.

Currently, from the perspective of market development, batteries have been widely used in many fields such as electric transportation tools including electric bicycles, electric motorcycles, and electric vehicles, electric tools, unmanned aerial vehicles, and energy storage devices. With continuous expansion of application fields of batteries, market demands for the batteries are also increasing.

For the development of battery technologies, many design factors need to be considered, for example, performance parameters such as energy density, cycle life, discharge capacity, and charge and discharge rate, as well as reliability of the battery, with the change of environmental conditions and/or internal conditions of the battery.

For a battery cell, main safety hazards are in the charging and discharging processes. In addition, a suitable ambient temperature also needs to be designed. To effectively avoid unnecessary losses, triple protective measures are usually provided for the battery cell. Specifically, the protective measures include at least a switch element, selection of an appropriate separator material, and a pressure relief mechanism. The switch element is an element that can stop charging or discharging of the battery when temperature or resistance in the battery cell reaches a specific threshold. The separator is configured to separate the positive electrode plate and the negative electrode plate. Micronscale (even nanoscale) micropores attached to the separator can be automatically dissolved when temperature of the separator rises to a specified value, such that metal ions cannot pass through the separator, and an internal reaction in the battery cell is terminated. The pressure relief mechanism is an element or part that is actuated when internal pressure or temperature of the battery cell reaches a predetermined threshold, so as to release the internal pressure or temperature. Design of the threshold varies with different design requirements. The threshold may depend on the material used for one or more of a positive electrode plate, a negative electrode plate, an electrolyte, and a separator in the battery cell. The pressure relief mechanism may be in a form of an explosion-proof valve, a gas valve, a pressure relief valve, a safety valve, or the like, and may specifically employ an element or part sensitive to pressure or temperature. To be specific, when the internal pressure or temperature of the battery cell reaches the predetermined threshold, the pressure relief mechanism performs an action or a weak structure provided in the pressure relief mechanism is destroyed, thereby forming an opening or a channel for releasing the internal pressure or temperature.

The current design solution of the pressure relief mechanism is primarily concerned with release of the high pressure and heat inside the battery cell, to be specific, discharging the emissions to the outside of the battery cell. An insulating member is usually disposed between the pressure relief mechanism and an electrode assembly, and the insulating member is configured to provide a vent gap between the electrode assembly and the pressure relief mechanism, so that the gas inside the battery cell can flow through the gap and then is discharged from the pressure relief mechanism.

However, when the pressure relief mechanism needs to discharge the gas, there is usually a large amount of gas inside the battery cell, resulting in a large pressure and a high temperature inside the battery cell. When the temperature inside the battery cell is higher than a melting point of the insulating member, the insulating member melts, and the melted insulating member blocks the gap between the electrode assembly and the pressure relief mechanism, or the electrode assembly directly adheres to the wall surface on which the pressure relief mechanism is located, thereby blocking the pressure relief mechanism. This affects the venting effect of the pressure relief mechanism, affecting the reliability of the battery cell, thereby affecting the reliability of the battery.

In view of this, to resolve the problem of poor reliability of the battery cell and the battery caused by the pressure relief mechanism being blocked due to the melting of the insulating member, the embodiments of this application provide a battery cell. The battery cell includes a housing, a pressure relief mechanism, an electrode assembly, and an insulating member. The housing has a first wall, the pressure relief mechanism is disposed on the housing, and the insulating member is disposed between the electrode assembly and the first wall. The insulating member is provided with a vent passage to guide gas inside the battery cell to the pressure relief mechanism. The insulating member includes a body and a ceramic coating, the body being made of an insulating material, and the ceramic coating being disposed on a surface of the body.

The ceramic coating is disposed on the surface of the body of the insulating member, so that the insulating member has good insulation performance and good heat resistance, reducing the risk of venting being affected by the melting of the insulating member due to excessively high temperature inside the battery cell, thereby improving the reliability of the battery cell.

The battery disclosed in the embodiments of this application may be used without limitation in electric devices such as vehicles, ships, or aircrafts. The battery disclosed in this application may be used to constitute a power supply system of that electric device.

An embodiment of this application provides an electric device that uses a battery as a power source. The electric device may be, but is not limited to, a mobile phone, a tablet computer, a laptop computer, an electric toy, an electric tool, an electric bicycle, an electric motorcycle, an electric car, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device of an embodiment of this application being a vehicle 1000 is used as an example for description of the following embodiments.

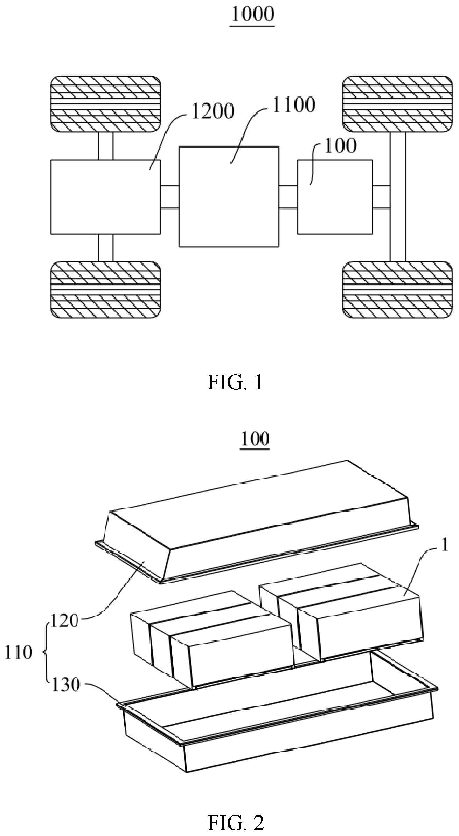

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front, or rear of the vehicle 1000. The battery 100 can be configured to supply power to the vehicle 1000. For example, the battery 100 can be used as an operational power source for the vehicle 1000 which is configured for a circuit system of the vehicle 1000, for example, to satisfy power needs of start, navigation, and running of the vehicle 1000.

The vehicle 1000 may further include a controller 1100 and a motor 1200, where the controller 1100 is configured to control the battery 100 to supply power to the motor 1200, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 according to some embodiments of this application. The battery 100 may further include a box 110, where a battery cell 1 is accommodated in the box 110. The box 110 is configured to provide an accommodating space for the battery cell 1. The box 110 may be a variety of structures. In some embodiments, the box 110 may include a first sub-box 120 and a second sub-box 130. The first sub-box 120 and the second sub-box 130 fit together to jointly define an accommodating space for accommodating the battery cell 1. The second sub-box 130 may be a hollow structure with an opening at one end, the first sub-box 120 may be a plate-shaped structure, and the first sub-box 120 covers the opening side of the second sub-box 130 so that the first sub-box 120 and the second sub-box 130 jointly define the accommodating space. Alternatively, both the first sub-box 120 and the second sub-box 130 may be hollow structures with an opening at one side, and the opening side of the first sub-box 120 is engaged with the opening side of the second sub-box 130.

In the battery 100, the battery cell 1 may be provided in plurality, and the plurality of battery cells 1 may be connected in series, parallel, or series-parallel, where being connected in series-parallel means a combination of series and parallel connections of the plurality of battery cells 1. The plurality of battery cells 1 may be directly connected in series, parallel, or series-parallel, and then an entirety of the plurality of battery cells 1 is accommodated in the box 110; or certainly, the battery 100 may be formed by a plurality of battery cells 1 being connected in series, parallel, or series-parallel first to form a battery module and then a plurality of battery modules being connected in series, parallel, or series-parallel to form an entirety which is accommodated in the box 110. The battery 100 may further include other structures. For example, the battery 100 may further include a busbar configured to implement electrical connection between the plurality of battery cells 1.

The battery cell 1 may be a secondary battery or a primary battery, and may be a lithium-sulfur battery, a sodium-ion battery, or a magnesium-ion battery, without being limited thereto.

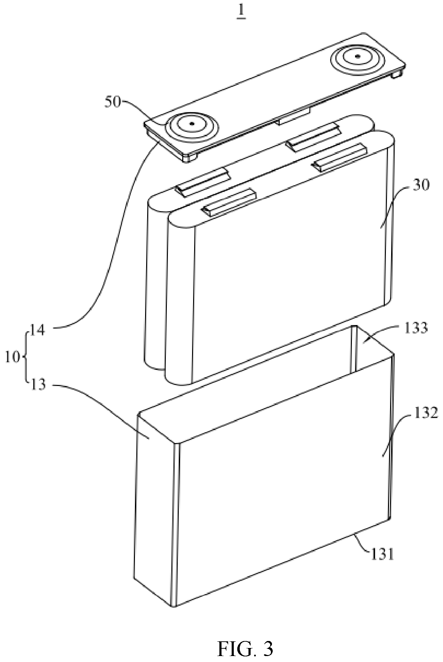

Referring to FIG. 3, FIG. 3 is an exploded view of a battery cell 1 according to some embodiments of this application. In some embodiments, the battery cell 1 includes a housing 10, an electrode assembly 30, and an electrode terminal 50. The housing 10 includes a shell 13 and an end cover 14, where the shell 13 has an opening 133, and the end cover 14 closes the opening 133 to isolate an internal environment of the battery cell 1 from an external environment.

The shell 13 is an assembly configured to form the internal environment of the battery cell 1 by fitting with the end cover 14, where the formed internal environment may be used to accommodate the electrode assembly 30, the electrolyte, and other components. The shell 13 and the end cover 14 may be independent components. The shell 13 may be of various shapes and sizes. Specifically, the shape of the shell 13 may be determined according to a specific shape and size of the electrode assembly 30. The shell 13 may be made of various materials, such as copper, iron, aluminum, stainless steel, aluminum alloy, and plastic.

The end cover 14 is a component that covers an opening of the shell 13 to isolate an internal environment of the battery cell 1 from an external environment. Without limitation, shape of the end cover 14 may be adapted to shape of the shell 13 to fit the shell 13. The electrode terminal 50 may be configured to be electrically connected to the electrode assembly 30 for outputting or inputting electrical energy of the battery cell 1. The end cover 14 may also be made of various materials, such as copper, iron, aluminum, stainless steel, aluminum alloy, and plastic, which are not particularly limited in the embodiments of this application. In some embodiments, an insulating structure may also be provided at an inner side of the end cover 14. The insulating structure may be configured to insulate an electrical connection component in the shell 13 from the end cover 14 to reduce the risk of short circuit. For example, the insulating structure may be made of plastic, rubber, or the like.

In some embodiments, the electrode assembly 30 is a component in which electrochemical reactions take place in the battery cell 1. The shell 13 may include one or more electrode assemblies 30. The electrode assembly 30 is mainly formed by winding or stacking a positive electrode plate and a negative electrode plate, and a separator is generally disposed between the positive electrode plate and the negative electrode plate. The separator is configured to separate the positive electrode plate from the negative electrode plate to reduce the risk of internal short circuit between the positive electrode plate and the negative electrode plate. Parts of the positive electrode plate and the negative electrode plate that have active substances constitute a main body of the electrode assembly 30, while parts of the positive electrode plate and the negative electrode plate that have no active substances each constitute a tab. A positive tab and a negative tab may both be located on one end of the main body or be located on two ends of the main body respectively. During charging and discharging of the battery, a positive electrode active substance and a negative electrode active substance react with the electrolyte, and the tabs are connected to the electrode terminals 50 to form a current loop.

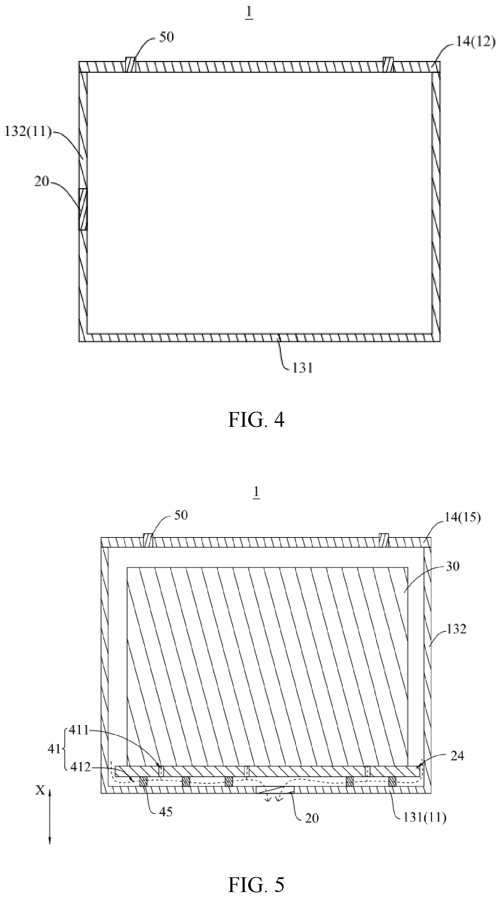

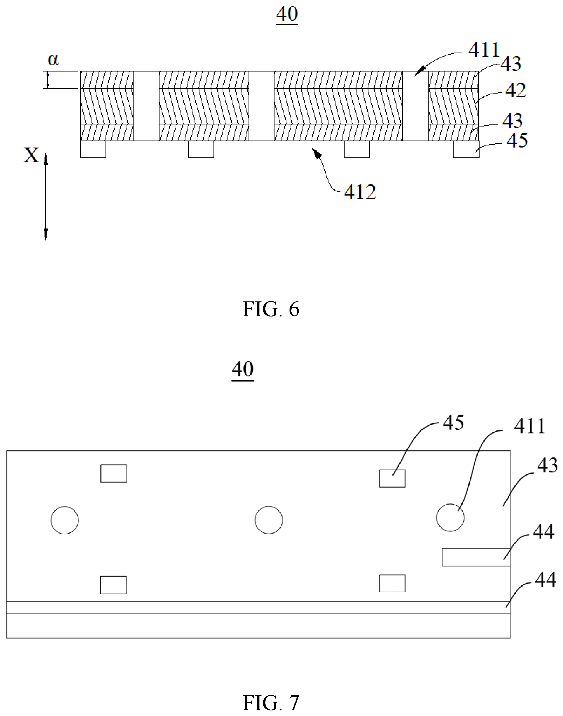

Referring to FIGs. 3 to 6, FIG. 4 is a schematic diagram of an internal structure of a battery cell according to some embodiments of this application; FIG. 5 is a schematic diagram of an internal structure of a battery cell according to some other embodiments of this application; and FIG. 6 is a schematic structural diagram of an insulating member according to some embodiments of this application. In FIG. 4, part of the structure of the battery cell is hidden, and only the positional relationship between the electrode terminal and the pressure relief mechanism is shown. The dashed lines and arrows in FIG. 5 indicate the gas flow directions. For ease of understanding, only part of the gas flow directions is shown, which does not represent all gas flow directions. For ease of presentation of the internal structure of the battery cell, the connection relationship between the electrode assembly and the electrode terminal is not shown. The embodiments of this application provide a battery cell 1. The battery cell 1 includes a housing 10, a pressure relief mechanism 20, an electrode assembly 30, and an insulating member 40. The housing 10 has a first wall 11, the pressure relief mechanism 20 is disposed on the housing 10, the electrode assembly 30 is disposed inside the housing 10, and the insulating member 40 is disposed between the electrode assembly 30 and the first wall 11. The insulating member 40 is configured to isolate the electrode assembly 30. The insulating member 40 is provided with a vent passage 41, and the vent passage 41 is configured to guide gas inside the battery cell 1 to the pressure relief mechanism 20. The insulating member 40 includes a body 42 and a ceramic coating 43, the body 42 being made of an insulating material, and the ceramic coating 43 being disposed on a surface of the body 42.

In some embodiments, the first wall 11 may be a bottom wall 131 of the housing 10, a side wall 132 of the housing 10, or an end cover 14 of the housing 10.

In some embodiments, the pressure relief mechanism 20 may be disposed on the first wall 11.

In some embodiments, the insulating member 40 is configured to isolate the electrode assembly 30, so the insulating member 40 can have good insulation performance and heat resistance.

In some embodiments, the insulating member 40 includes the body 42 and the ceramic coating 43, the body 42 may be a plate, and the ceramic coating 43 may be formed by spraying, electroplating, or the like.

In some embodiments, the ceramic coating 43 may cover the entire surface of the body 42 or only part of the surface of the body 42.

In some embodiments, the insulating member 40 may have a gap with the first wall 11 to form part of the vent passage 41. The insulating member 40 may alternatively have a gap with other wall surfaces of the housing 10 to form part of the vent passage 41.

In some embodiments, the insulating member 40 is disposed between the first wall 11 and the electrode assembly 30, the insulating member 40 may be spaced apart from the first wall 11, the electrode assembly 30 may be placed on the insulating member 40, and the insulating member 40 supports the electrode assembly 30.

In some embodiments, the material of the ceramic coating 43 may include oxide ceramic powder, silicate, aluminate, ferrite, and the like, for example, lightweight alumina, silicon carbide, and lightweight zirconia. The ceramic coating 43 has good wear resistance, corrosion resistance, and thermal shock resistance, and the ceramic coating 43 has higher heat resistance than the body 42.

In the technical solution of the embodiments of this application, the pressure relief mechanism 20 is disposed on the housing 10 of the battery cell 1, and the insulating member 40 is disposed between the electrode assembly 30 and the first wall 11, so that gas generated by the electrode assembly 30 can be easily discharged from the pressure relief mechanism 20 through the vent passage 41 of the insulating member 40. In addition, the ceramic coating 43 is disposed on the surface of the body 42 of the insulating member 40, so that the insulating member 40 has good insulation performance and good heat resistance, reducing the risk of venting being affected by the melting of the insulating member 40 due to excessively high temperature inside the battery cell 1. Furthermore, the insulating member 40 exhibits good electrolyte adsorption and wicking, which facilitates the infiltration into the electrode assembly 30, improving the reliability of the battery cell 1.

Referring to FIGs. 3 to 6, in some embodiments, two surfaces of the body 42 in a thickness direction X are each provided with the ceramic coating 43.

In some embodiments, the thickness direction X may be represented by the direction indicated by the letter X in the figure.

In some embodiments, the ceramic coating 43 may cover both surfaces of the body 42 in the thickness direction X.

In the technical solution of the embodiments of this application, the two surfaces of the body 42 in the thickness direction X are each provided with the ceramic coating 43, so that both surfaces of the body 42 in the thickness direction X have good heat resistance, better reducing the risk of venting being affected by the melting of the insulating member 40. In addition, the insulating member 40 exhibits better electrolyte adsorption and wicking, improving the reliability of the battery cell 1.

Referring to FIG. 6, in some embodiments, thickness of the ceramic coating 43 is 0.05 mm to 1 mm.

In some embodiments, the thickness of the ceramic coating 43 may be represented by the letter α in the figure.

In some embodiments, the thickness of the ceramic coating 43 is 0.05 mm to 1 mm, where the thickness of the ceramic coating 43 may be 0.05 mm, 0.06 mm, 0.07 mm, 0.08 mm, 0.09 mm, 1 mm, or the like.

In some embodiments, the thickness of the ceramic coating 43 may be 0.07 mm to 0.08 mm.

In some embodiments, the thickness of the ceramic coating 43 may be 0.07 mm.

In some embodiments, the thickness of the ceramic coating 43 is related to thickness of the insulating member 40. The insulating member 40 is disposed between the electrode assembly 30 and the first wall 11, that is, the thickness of the insulating member 40 and the size of the electrode assembly 30 together occupy the internal space of the housing 10. Therefore, if the insulating member 40 has greater thickness, more space of the housing 10 is occupied.

In the technical solution of the embodiments of this application, the thickness of the ceramic coating 43 being set to 0.05 mm to 1 mm makes the insulating member 40 have good heat resistance and good electrolyte adsorption and wicking, and also reduces the impact of the insulating member 40 on the occupancy rate of the internal space of the housing 10, allowing the battery cell 1 to have high space utilization.

Referring to FIGs. 3 to 7, FIG. 7 is a schematic structural diagram of the insulating member in FIG. 6 from another perspective, where FIG. 7 is a schematic diagram of a surface of the insulating member facing away from the electrode assembly in the thickness direction. In some embodiments, the insulating member 40 is plate-shaped, where the vent passage 41 includes a vent groove 44 provided on at least one surface of the insulating member 40 in a thickness direction X, and the vent groove 44 extends to an edge of the insulating member 40.

In some embodiments, the thickness direction X of the insulating member 40 may be the thickness direction X of the body 42.

In some embodiments, the vent groove 44 may be provided on a surface of the insulating member 40 facing away from the first wall 11 in the thickness direction X, on the surface of the insulating member 40 facing away from the electrode assembly 30 in the thickness direction X, or on two surfaces of the insulating member 40 in the thickness direction X.

In some embodiments, before the ceramic coating 43 is disposed on the body 42, the vent groove 44 may be formed by machining or the like.

In some embodiments, on the surface of the insulating member 40, the vent groove 44 may extend from one end of the insulating member 40 to the opposite end or adjacent end of the insulating member 40. Alternatively, the vent groove 44 may extend from the middle part of the insulating member 40 to the edge of the insulating member 40.

In some embodiments, the gas inside the battery cell 1 can converge in the vent groove 44 and flow along the vent groove 44 to the edge of the insulating member 40, so that the gas flows to the gap between the insulating member 40 and the wall surface of the housing 10 and then is discharged from the pressure relief mechanism 20.

In the technical solution of the embodiments of this application, the vent groove 44 is provided on at least one surface of the insulating member 40 in the thickness direction X, and the vent groove 44 extends to the edge of the insulating member 40, so as to guide the gas generated by the electrode assembly 30, improving the venting capability of the battery cell 1.

Referring to FIG. 7, in some embodiments, the ceramic coating 43 is provided on a surface of the vent groove 44.

In some embodiments, the ceramic coating 43 may be provided on the wall surface forming the vent groove 44.

In the technical solution of the embodiments of this application, the ceramic coating 43 is provided on the surface of the vent groove 44, so that the surfaces of the body 42 in the thickness direction X are each provided with the ceramic coating 43, and thus the insulating member 40 has good heat resistance and good electrolyte adsorption and wicking, improving the reliability of the battery cell 1.

Referring to FIGs. 5 to 7, in some embodiments, the vent passage 41 includes a vent hole 411 running through the insulating member 40 along the thickness direction X of the body 42.

In some embodiments, the vent hole 411 may be provided in plurality, which may be evenly provided on the insulating member 40 or irregularly provided on the insulating member 40.

In some embodiments, when observed along the thickness direction X, the shapes of the vent holes 411 may be all the same, partially the same, or partially different. The shape of the vent hole 411 may be rectangular, circular, elliptical, or the like.

In some embodiments, the vent hole 411 is processed after the ceramic coating 43 is disposed on the body 42, so that the ceramic coating 43 also has the vent hole 411, and the vent hole 411 runs through the two surfaces of the insulating member 40 in the thickness direction X.

In the technical solution of the embodiments of this application, the insulating member 40 is provided with the vent hole 411 running through the insulating member 40 along the thickness direction X of the body 42, which communicates an end surface of the insulating member 40 close to the electrode assembly 30 and an end surface of the first wall 11. This facilitates the flowing of the gas generated by the electrode assembly 30 through the vent hole 411, improving the venting capability of the battery cell 1, and also facilitates the infiltration of the electrolyte located on the first wall 11 into the electrode assembly 30 through the vent hole 411, improving the reliability of the battery cell 1.

Referring to FIGs. 5 to 7, in some embodiments, the insulating member 40 further includes a plurality of spacers 45, where the plurality of spacers 45 are spaced apart on a side of the body 42 facing toward the first wall 11 to form a vent gap 412 between the body 42 and the first wall 11, and the vent passage 41 includes the vent gap 412.

In some embodiments, the plurality of spacers 45 are provided on the side of the body 42 facing toward the first wall 11, that is, the spacers 45 support the body 42, so that the gap is formed between the body 42 and the first wall 11.

In some embodiments, the spacer 45 may be a cuboid, a cylinder, or the like.

In some embodiments, in the thickness direction X, a cross-sectional area of the spacer 45 may be much smaller than a cross-sectional area of the body 42, so that the vent gap 412 has a large space.

In some embodiments, in the thickness direction X, the position of the vent hole 411 may be staggered from the position of the spacer 45, that is, the vent hole 411 and the spacer 45 do not overlap in position in the thickness direction X, so as to reduce the probability of the venting of the vent hole 411 being affected by the spacer 45.

In some embodiments, the spacers 45 may be evenly provided along the center of the body 42, so that the spacers 45 support the body 42 with good stability.

In the technical solution of the embodiments of this application, the plurality of spacers 45 are provided between the body 42 and the first wall 11, so that there is the vent gap 412 between the body 42 and the first wall 11, allowing the gas generated by the electrode assembly 30 to flow through the vent gap 412, improving the venting capability of the battery cell 1, thereby improving the reliability of the battery cell 1.

In some embodiments, the spacer 45 is made of metal, mica, or porous ceramic.

In some embodiments, when the spacer 45 is made of metal, the material may be the same as or similar to the material of the housing 10, and may be aluminum, copper, or the like.

In some embodiments, when the spacer 45 is made of mica, the spacer 45 may be phlogopite, biotite, or the like.

In some embodiments, the spacer 45 may alternatively be made of porous ceramic, and the pores may extend along the thickness direction X or along other directions, which facilitates not only the flowing of the gas but also electrolyte adsorption and wicking.

In the technical solution of the embodiments of this application, the spacer 45 being made of metal reduces the manufacturing cost of the spacer 45, saving the costs, and also provides good support for the body 42. The spacer 45 being made of mica and porous ceramic provides good support for the body 42 and has good electrolyte adsorption and wicking, improving the reliability of the battery cell 1.

Referring to FIGs. 5 and 6, in some embodiments, the vent passage 41 includes a vent hole 411 running through the body 42 along the thickness direction X of the body 42, where the vent hole 411 is in communication with the vent gap 412.

In some embodiments, the vent hole 411 is in communication with the vent gap 412, and the gas generated by the electrode assembly 30 can flow from an end of the insulating member 40 facing away from the first wall 11 to an end of the insulating member 40 facing toward the first wall 11 through the vent hole 411, and thus directly flows into the vent gap 412, shortening the flow path of the gas.

In the technical solution of the embodiments of this application, the vent hole 411 is made to communicate with the vent gap 412, so that part of the gas generated by the electrode assembly 30 can flow into the vent gap 412 through the vent hole 411 and then be discharged from the pressure relief mechanism 20, improving the venting capability of the battery cell 1.

Referring to FIG. 5, in some embodiments, the pressure relief mechanism 20 is disposed on the first wall 11.

In some embodiments, the first wall 11 may be the bottom wall 131 of the housing 10, the side wall 132 of the housing 10, or the end cover 14 of the housing 10, that is, the pressure relief mechanism 20 may be disposed on the bottom wall 131, the side wall 132, or the end cover 14.

In some embodiments, the insulating member 40 is disposed between the electrode assembly 30 and the first wall 11, the insulating member 40 can form the vent gap 412 with the first wall 11, that is, the gas inside the battery cell 1 can flow to the first wall 11 through the vent passage 41, and the pressure relief mechanism 20 is disposed on the first wall 11, so that the gas can flow out of the pressure relief mechanism 20 through the vent passage 41.

In the technical solution of the embodiments of this application, the pressure relief mechanism 20 is disposed on the first wall 11, and the insulating member 40 is disposed between the first wall 11 and the electrode assembly 30, so that the gas inside the battery cell 1 is guided to the pressure relief mechanism 20 through the vent passage 41 of the insulating member 40, which shortens the flow path of the gas inside the battery cell 1, and reduces the venting time, allowing the battery cell 1 to have good venting capability.

Referring to FIG. 4, in some embodiments, the battery cell 1 includes an electrode terminal 50, where the housing 10 has a second wall 12 disposed adjacent to the first wall 11, and the electrode terminal 50 is disposed on the second wall 12.

In some embodiments, the pressure relief mechanism 20 may be disposed on the bottom wall 131, and the electrode terminal 50 may be disposed on the side wall 132.

In some embodiments, the pressure relief mechanism 20 may be disposed on the side wall 132, and the electrode terminal 50 may be disposed on the bottom wall 131 or the end cover 14.

In some embodiments, the pressure relief mechanism 20 may be disposed on the end cover 14, and the electrode terminal 50 may be disposed on the side wall 132.

In the technical solution of the embodiments of this application, the electrode terminal 50 is disposed on the second wall 12 and the pressure relief mechanism 20 is disposed on the first wall 11, that is, the electrode terminal 50 and the pressure relief mechanism 20 are disposed on different wall surfaces, which reduces the risk of the electrode terminal being affected by the venting of the pressure relief mechanism 20, improving the reliability of the battery cell 1, and also enables the electrode terminal 50 and the pressure relief mechanism 20 to be installed and maintained separately, improving the convenience of installation and maintenance of the battery cell 1.

Referring to FIG. 5, in some embodiments, the battery cell 1 includes an electrode terminal 50, where the housing 10 has a third wall 15 disposed opposite the first wall 11, and the electrode terminal 50 is disposed on the third wall 15.

In some embodiments, the pressure relief mechanism 20 may be disposed on the bottom wall 131, that is, the bottom wall 131 is the first wall 11, and the electrode terminal 50 may be disposed on the end cover 14, that is, the end cover 14 is the third wall 15.

In some embodiments, the pressure relief mechanism 20 may be disposed on the end cover 14, and the electrode terminal 50 may be disposed on the bottom wall 131.

In some embodiments, the pressure relief mechanism 20 may be disposed on one side wall 132, and the electrode terminal 50 may be disposed on the other side wall 132 opposite the side wall 132.

In the technical solution of the embodiments of this application, the electrode terminal 50 is disposed on the third wall 15 and the pressure relief mechanism 20 is disposed on the first wall 11, that is, the electrode terminal 50 and the pressure relief mechanism 20 are disposed on opposite wall surfaces, which reduces the risk of the electrode terminal being affected by the venting of the pressure relief mechanism 20. In addition, the electrode terminal 50 is the current outlet of the battery cell 1 and needs to carry a large current. Therefore, the electrode terminal 50 and the pressure relief mechanism 20 being disposed on opposite wall surfaces also reduces the risk of an explosion-proof valve being affected by the electrode terminal 50, so that the battery cell 1 has good structural strength, improving the reliability of the battery cell 1.

Referring to FIG. 5, in some embodiments, the first wall 11 is disposed downward when the battery cell 1 is placed in an electric device or the battery 100.

In some embodiments, the first wall 11 may be the bottom wall 131, and the pressure relief mechanism 20 is disposed on the bottom wall 131.

In some embodiments, when the battery cell 1 is placed in the electric device or the battery 100, the first wall 11 is disposed downward, the electric device may be a vehicle or the like, and the first wall 11 may be the lowermost wall surface of the battery cell 1, that is, the lowest position of the first wall 11 is below other wall surfaces of the battery cell 1.

In some embodiments, the first wall 11 is disposed downward, and the up-down direction may be consistent with the thickness direction X.

In the technical solution of the embodiments of this application, when the battery cell 1 is placed, the first wall 11 faces downward, that is, the pressure relief mechanism 20 faces downward. In this case, when the temperature or internal pressure of the battery cell 1 reaches a threshold, the pressure relief mechanism 20 discharges the gas, reducing the probability that impact waves or other substances generated by the pressure relief mechanism 20 during venting pose risks, so that the battery cell 1 has good reliability.

Referring to FIGs. 3 and 5, in some embodiments, the housing 10 includes a shell 13 and an end cover 14, where the shell 13 includes a bottom wall 131 and a side wall 132, the side wall 132 surrounds the bottom wall 131, the side wall 132 is connected to the bottom wall 131 on one end and encloses an opening 133 on the other end, the end cover 14 covers the opening 133, and the first wall 11 is the bottom wall 131.

In some embodiments, the bottom wall 131 and the side wall 132 may be integrally formed.

In some embodiments, the housing 10 may be made of aluminum alloy.

In some embodiments, the side wall 132 may extend along the thickness direction X of the body 42, and the bottom wall 131 and the end cover 14 may be disposed opposite each other in the thickness direction X of the body 42.

In the technical solution of the embodiments of this application, the first wall 11 is the bottom wall 131, that is, the pressure relief mechanism 20 is disposed on the bottom wall 131, and the pressure relief mechanism 20 faces downward when the battery cell 1 is placed, reducing the probability that impact waves or other substances generated by the pressure relief mechanism 20 during venting pose risks, so that the battery cell 1 has good reliability.

In some embodiments, the body 42 is made of polymer.

In some embodiments, the polymer may be PP (Polypropylene, polypropylene, PP for short), PI (Polyimide, polyimide, PI for short), PC (Polycarbonate, polycarbonate, PC for short), PET (Polyethylene Terephthalate, polyethylene terephthalate, PET for short), or the like.

In the technical solution of the embodiments of this application, the body 42 being made of polymer allows the body 42 to have good corrosion resistance and high-temperature resistance and good insulation performance.

Referring to FIG. 2, the embodiments of this application further provide a battery 100, where the battery 100 includes the battery cell 1 according to any one of the foregoing embodiments.

Referring to FIGs. 1 to 3, the embodiments of this application further provide an electric device including the battery cell 1 according to any one of the foregoing embodiments or the battery 100 according to any one of the foregoing embodiments, where the battery cell 1 or the battery 100 is configured to supply electric energy.

Referring to FIGs. 3 to 7, in some embodiments, a battery cell 1 includes a housing 10, a pressure relief mechanism 20, an electrode assembly 30, an electrode terminal 50, and an insulating member 40. The housing 10 includes a shell 13 and an end cover 14, the shell 13 includes a bottom wall 131 and a side wall 132, the side wall 132 surrounds the bottom wall 131, the side wall 132 is connected to the bottom wall 131 on one end and encloses an opening 133 on the other end, the end cover 14 covers the opening 133, the pressure relief mechanism 20 is disposed on the bottom wall 131, and the electrode terminal 50 is disposed on the end cover 14.

In some embodiments, the electrode assembly 30 is disposed inside the housing 10, and the insulating member 40 is disposed between the electrode assembly 30 and the bottom wall 131. The insulating member 40 supports the electrode assembly 30, and the insulating member 40 is provided with a vent passage 41. Gas inside the battery cell 1 is guided through the vent passage 41 to the pressure relief mechanism 20 on the bottom wall 131 and then discharged.

In some embodiments, the insulating member 40 includes a body 42 and a ceramic coating 43. The body 42 is made of an insulating material, such as polymer, and two surfaces of the body 42 in the thickness direction X may be each provided with the ceramic coating 43.

In some embodiments, the vent passage 41 may include a vent hole 411 and a vent gap 412, the vent hole 411 may run through two surfaces of the insulating member 40 in the thickness direction X of the body 42, and the vent hole 411 is in communication with the vent gap 412. The insulating member 40 further includes a plurality of spacers 45, where the plurality of spacers 45 are spaced apart on a side of the body 42 facing toward the first wall 11 to form the vent gap 412 between the body 42 and the first wall 11. The gas inside the battery cell 1 converges in the vent gap 412 and is discharged from the pressure relief mechanism 20.

In some embodiments, the insulating member 40 may be a bottom support plate.

In the technical solution of the embodiments of this application, the ceramic coating 43 is disposed on the surface of the body 42 of the insulating member 40, so that the insulating member 40 has good insulation performance and heat resistance as well as good electrolyte adsorption and wicking, thereby improving the reliability of the battery cell 1.

Although this application has been described with reference to the preferred embodiments, various modifications to this application and replacements with equivalents of the components herein can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, **characterized by** comprising:
a housing having a first wall;
a pressure relief mechanism disposed on the housing;
an electrode assembly disposed inside the housing; and
an insulating member disposed between the electrode assembly and the first wall, wherein the insulating member is provided with a vent passage, and the vent passage is configured to guide gas inside the battery cell to the pressure relief mechanism;
wherein the insulating member comprises a body and a ceramic coating, the body being made of an insulating material, and the ceramic coating being disposed on a surface of the body.

2. The battery cell according to claim 1, **characterized in that** two surfaces of the body in a thickness direction are each provided with the ceramic coating.

3. The battery cell according to claim 1 or 2, **characterized in that** thickness of the ceramic coating is 0.05 mm to 1 mm.

4. The battery cell according to any one of claims 1 to 3, **characterized in that** the insulating member is plate-shaped, wherein the vent passage comprises a vent groove provided on at least one surface of the insulating member in a thickness direction, and the vent groove extends to an edge of the insulating member.

5. The battery cell according to claim 4, **characterized in that** the ceramic coating is provided on a surface of the vent groove.

6. The battery cell according to any one of claims 1 to 5, **characterized in that** the vent passage comprises a vent hole running through the insulating member along a thickness direction of the body.

7. The battery cell according to any one of claims 1 to 6, **characterized in that** the insulating member further comprises a plurality of spacers, wherein the plurality of spacers are spaced apart on a side of the body facing toward the first wall to form a vent gap between the body and the first wall, and the vent passage comprises the vent gap.

8. The battery cell according to claim 7, **characterized in that** the spacer is made of metal, mica, or porous ceramic.

9. The battery cell according to claim 7 or 8, **characterized in that** the vent passage comprises a vent hole running through the body along a thickness direction of the body, wherein the vent hole is in communication with the vent gap.

10. The battery cell according to any one of claims 1 to 9, **characterized in that** the pressure relief mechanism is disposed on the first wall.

11. The battery cell according to any one of claims 1 to 10, **characterized in that** the battery cell comprises an electrode terminal, wherein the housing has a second wall disposed adjacent to the first wall, and the electrode terminal is disposed on the second wall.

12. The battery cell according to any one of claims 1 to 10, **characterized in that** the battery cell comprises an electrode terminal, wherein the housing has a third wall disposed opposite the first wall, and the electrode terminal is disposed on the third wall.

13. The battery cell according to any one of claims 1 to 12, **characterized in that** the first wall is disposed downward when the battery cell is placed in an electric device or a battery.

14. The battery cell according to any one of claims 1 to 13, **characterized in that** the housing comprises a shell and an end cover, wherein the shell comprises a bottom wall and a side wall, the side wall surrounds the bottom wall, the side wall is connected to the bottom wall on one end and encloses an opening on the other end, the end cover covers the opening, and the first wall is the bottom wall.

15. The battery cell according to any one of claims 1 to 14, **characterized in that** the body is made of polymer.

16. A battery, **characterized by** comprising the battery cell according to any one of claims 1 to 15.

17. An electric device, **characterized in that** the electric device comprises the battery cell according to any one of claims 1 to 15 or the battery according to claim 16, wherein the battery cell or the battery is configured to supply electric energy.
